# EUROPEAN PATENT APPLICATION

(11) **EP 4 749 865 A1**
(43) Date of publication of application: **27.05.2026**
(21) Application number: 25218444.5
(22) Date of filing: 25.11.2025
(51) Int. Cl.: H02J 3/007, H02J 9/06

(54) **POWER DISTRIBUTION WITH OPTIMIZED TRANSFER BETWEEN POWER SOURCES**

(30) Priority: 26.11.2024 US 202463725152 P; 11.11.2025 US 202519385390
(71) Applicant: Vertiv Corporation, Westerville, OH 43082 (US)
(72) Inventor: ZIGON, Taylor, Westerville, 43082 (US); PELTIER, Jason David, Westerville, 43082 (US); VAN FOSSEN, John Nelson, Westerville, 43082 (US)
(74) Representative: Ambroz, Simon

(57) **Abstract**

A power distribution apparatus to control transfer time and inrush factor when switching between power sources is disclosed. The power distribution apparatus includes first and second power sources configured to provide electrical power to a load. A transfer switch is configured to switch a source of power to the load between the first and second power sources. A control circuit is configured to cause the transfer switch to select one of the first and second power sources to provide power to the load. The control circuit is configured to cause switching between the first and second power sources based on a first user input parameter and a second user input parameter, wherein the first user input parameter specifies a maximum specified transfer time, and wherein the second user input parameter specifies a maximum specified inrush factor.

## Description

### CROSS-REFERENCE TO RELATED APPLICATIONS

This application claims the benefit of U.S. Provisional Application No. 63/725152, filed on November 26, 2024, and U.S. Nonprovisional application No. 19/385,390, filed on November 11, 2025.

### TECHNICAL FIELD

This disclosure is related to electrical power distribution systems, and more particularly, to power distribution systems in which a load may receive power from a selected one of a number of power sources.

### BACKGROUND

Many large electrical loads may have a need to operate without substantial interruption. For example, a data center comprising a number of servers may be operated continuously. To ensure continuous operation, many such electrical loads have backup power sources to ensure the supply of power if a main (or primary) power source cannot provide power for some reason. The different power sources may be connected by a switch to the load.

One type of switch capable of rapid transfer between two different power sources is referred to as a static transfer switch (STS). An STS may be used to select which of the power sources is to provide power to the load at any given time and may allow for rapid transfers of power when one of the power sources needs to be taken offline or cannot otherwise provide power within specified limits. In designing an STS for switching between power sources, consideration may be given to various parameters such as transfer time (the time required to transition from the primary power source to the backup power source) and an inrush factor (the amount that an inrush current that occurs upon switching exceeds a nominal current).

### SUMMARY

A power distribution apparatus to control transfer time and inrush factor when switching between power sources is disclosed. A power distribution apparatus includes first and second power sources configured to provide electrical power to a load. A transfer switch is configured to switch a source of power to the load between the first and second power sources. A control circuit is configured to cause the transfer switch to select one of the first and second power sources to provide power to the load. The control circuit is configured to cause switching between the first and second power sources based on a first user input parameter and a second user input parameter, wherein the first user input parameter specifies a maximum specified transfer time, and wherein the second user input parameter specifies a maximum specified inrush factor.

### BRIEF DESCRIPTION OF THE DRAWINGS

The above and/or other aspects will become apparent and more readily appreciated from the following description of example embodiments, taken in conjunction with the accompanying drawings, in which:
FIG. 1 is a block diagram of one example of a power distribution system coupled to a load.
FIG. 2 is a diagram illustrating a relationship between an inrush factor and a transfer time for a transfer switch of a power distribution system according to the disclosure.
FIG. 3 is a flow diagram of one example of a method for switching between power sources providing electrical power to a load.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described herein in detail.

For electrical power loads that can receive power from different power sources, a transfer switch is provided to enable switching from one power source (e.g., a primary power source) to another power source (e.g., a secondary, or backup power source). Switching may occur for various reasons, such as the need for maintenance, a power source operating outside of specified limits, and so on.

For certain types of electrical loads, it is critical to be able to switch between power sources quickly. However, when switching between power sources, inrush currents can occur, and these currents can overload the upstream power structure, potentially causing malfunctions or damage. An inrush factor is a metric that indicates the amount (e.g., a multiple) at which a nominal current is exceeded by inrush currents during switching.

The transfer time and the inrush factor that occur during switching between electrical loads are related to one another. Generally speaking, longer transfer times are associated with smaller inrush factors. Conversely, shorter transfer times are associated with greater inrush factors. However, shorter transfer times may be required for certain electrical loads such that their operation is not substantially interrupted.

The present disclosure is directed to a power distribution system with a transfer switch with selectable user input parameters to enable a balance between the transfer time and the inrush factor. A transfer switch according to the disclosure may enable a user to input, through an input mechanism, a transfer time and/or an inrush factor. Since these two quantities affect one another, inputting a value for one changes the other. The user input may enable selection of a value that allows power to be switched from one source to another within an amount of time that allows minimal (if any) interruption to the electrical load while also managing inrush currents such that overload conditions are avoided. Various embodiments of such a power distribution system are now discussed in further detail.

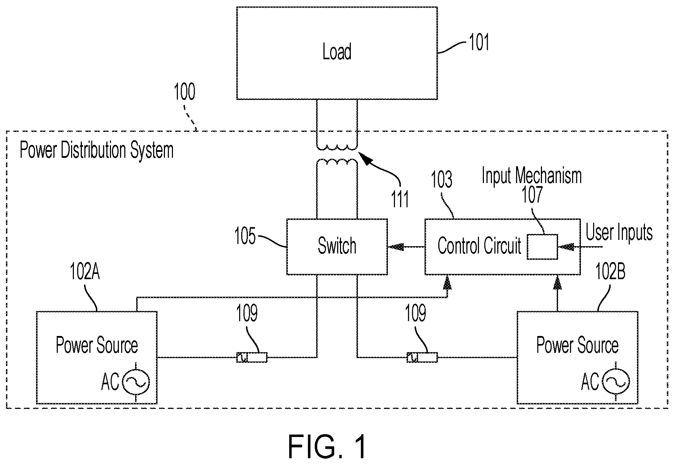

FIG. 1 is a block diagram of a power distribution system coupled to a load in accordance with the disclosure. Power distribution system 100 as shown here is coupled to provide power to load 101. Power distribution system 100 includes a first power source 102A and a second power source 102B. In some embodiments, one of these power sources may be designated as a primary power source, while the other is designated as a secondary, or backup power source.

Power sources 102A and 102B are shown here as AC power sources, although this is intended to be a non-limiting example. Power sources 102A and 102B are each coupled to a switch 105 via corresponding relays 109. At a given time, one of power sources 102A and 102B may be providing power to load 101, while the other one generates power in a standby mode. Power sources 102A and 102B may be substantially identical in some embodiments, with each being capable of providing power to load 101 within specified ranges of voltage and current.

Switch 105 in the illustrated example is a static transfer switch (STS) that may provide a transfer of power source relatively quickly so as to minimize the interruption of electrical power provided to load 101. Transformer 111 as shown here is coupled between switch 105 and load 101. The transformer may be a step-down transformer to reduce the voltage received from the currently selected one of power sources 102A and 102B.

Power distribution system 100 also includes a control circuit 103. The functions carried out by control circuit 103 include controlling the switch to select the operational power source (i.e., that which is currently providing power to load 101), as well as monitoring operation of both power sources. In monitoring the operation of power sources 102A and 102B may receive voltage and current readings to check if they are operating within specified limits of these parameters. In some embodiments, control circuit 103 may also receive temperature readings to check to see if power sources 102A and 102B are operating within specified thermal limits.

An input mechanism 107 implemented in control circuit 103 and associated with switch 105 may allow a user to specify a transfer time, and inrush factor, or both. Since these quantities are related to one another, selection of a particular value of one of these parameters results in a change to the other parameter. However, for a given value of one parameter, there may be a range of values for the other value that may be selected. In some embodiments, input mechanism 107 allows the selection of particular settings that result in a selected value for both the transfer time and the inrush factor.

Switching from one power source to another may occur for various reasons. For example, periodic maintenance may be performed on one of the power sources, thereby necessitating a switch to the other power source. In some instances, the operational power source may be operating outside of specified limits for one or more parameters as determined by control circuit 103.

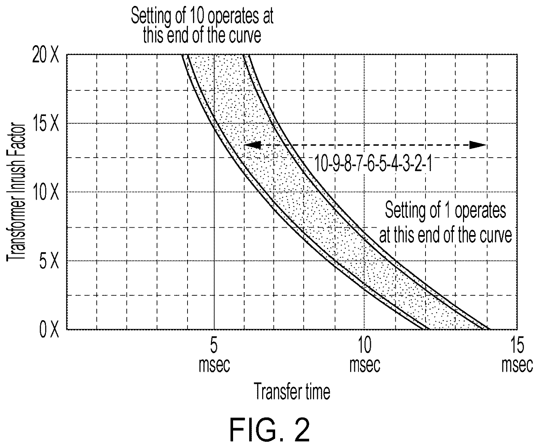

FIG. 2 is a diagram illustrating a relationship between an inrush factor and a transfer time for a transfer switch of a power distribution system according to the disclosure. The illustrated example is a graph with the vertical axis corresponding to an inrush factor and the horizontal axis corresponding to the transfer time. In some embodiments of the power distribution system, such as that depicted here, a user may select a value from 1 to 10, with each setting value corresponding to a value of the inrush factor and the transfer time.

In this example, a setting value of 10 may correspond to a maximum specified value of the inrush factor and may also correspond to a minimum specified value of the transfer time. Conversely, a setting value of 1 in this example may correspond to a minimum value of the inrush factor but a maximum value of the transfer time. A setting value of less than 10 but greater than 1 may correspond to a value of the inrush factor that is greater than the minimum but less than the maximum, and similarly, a transfer time that is also greater than the minimum and less than the maximum.

In some embodiments, as FIG. 2 further illustrates, for various settings there may be a range of values taken by the inrush factor along the vertical axis and another range of values taken by the transfer time along the horizontal axis. Accordingly, in some embodiments, the user inputs for these parameters may be input independently within these ranges for greater fine-tuning of the switching operation. For example, a user may input a particular value for the inrush factor and then select, within a given range, a particular value for the transfer time.

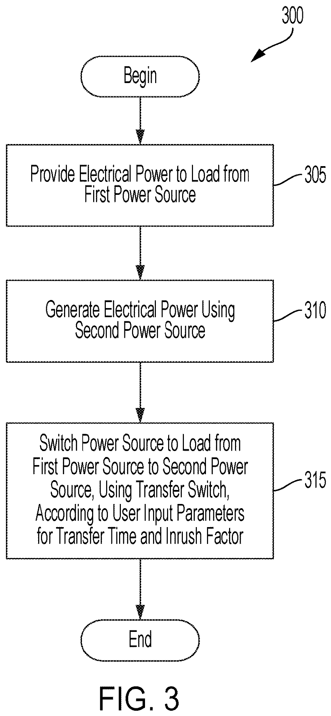

FIG. 3 is a flow diagram of a method for switching between power sources providing electrical power to a load. Sin come embodiments, Method 300 may be carried out by a power distribution system that can provide power to an electrical load from one of a plurality of at least two power sources, in accordance with this disclosure. This may include (but is not limited to) the power distribution system shown in FIG. 1.

Method 300 includes providing electrical power from a first power source to an electrical load (block 305). The first power source may be a primary power source in a system having redundant power sources to provide backup. Method 300 further includes generating power using a second power source (block 310). The second power source may be a backup, or secondary power source that provides redundancy in the event that it needs to take over for the first power source in providing electrical power to the load.

In various scenarios, the source of power to the electrical load may be switched from the first power source to the second power source. Accordingly, Method 300 includes switching the power source to the load from the first power source to the second power source, using a transfer switch and in accordance with user parameters for an inrush factor and a transfer time (block 315). The selection of these parameters may be made in accordance with the discussion above and desired operating specifications of the electrical load. Some electrical loads may have the capability to tolerate a larger inrush factor, and thus the switching may be carried out with a lower transfer time. Other electrical loads may have a more limited tolerance with respect to the inrush factor, and thus switching may be carried out with a longer transfer time.

It may be understood that the example embodiments described herein may be considered in a descriptive sense only and not for purposes of limitation. Descriptions of features or aspects within each example embodiment may be considered as available for other similar features or aspects in other example embodiments.
Disclosed herein are also the following clauses:
1. A power distribution apparatus comprising:
   a first power source configured to provide electrical power to a load;
   a second power source configured to provide electrical power to the load;
   a transfer switch configured to switch a source of power to the load between the first power source and the second power source; and
   a control circuit configured to cause the transfer switch to select one of the first and second power sources to provide power to the load, wherein the control circuit is configured to cause switching between the first and second power sources based on a first user input parameter and a second user input parameter, wherein the first user input parameter specifies a transfer time, and wherein the second user input parameter specifies an inrush factor.
2. The power distribution apparatus of clause 1, wherein first and second power sources are AC power sources.
3. The power distribution apparatus of any preceding clause, wherein, in response to switching between the first and second power sources, the inrush factor increases as the transfer time decreases, and wherein the inrush factor decreases as the transfer time increases.
4. The power distribution apparatus of any preceding clause, further comprising a transformer coupled to receive power from a selected one of the first and second power sources.
5. The power distribution apparatus of any preceding clause, wherein the first power source is a primary power source, and wherein the second power source is a secondary power source.
6. The power distribution apparatus of any preceding clause, further comprising at least one primary relay coupled between the first power source and the load, and at least one secondary relay coupled between the second power source and the load.
7. The power distribution apparatus of any preceding clause, wherein the control circuit includes a user input mechanism having a plurality of settings, wherein each of the plurality of settings specifies the transfer time and the inrush factor.
8. The power distribution apparatus of clause 7, wherein a first one of the plurality of settings, when selected, causes a transfer between the first and second power sources, when carried out, to be performed at a maximum specified value of the transfer time and a minimum specified value of the inrush factor.
9. The power distribution apparatus of clause 8, wherein a second one of the plurality of settings, when selected, causes a transfer between the first and second power sources, when carried out, to be performed at a maximum specified value of the inrush factor and a minimum specified value of the transfer time.
10. The power distribution apparatus of clause 9, wherein a third one of the plurality of settings, when selected, causes a transfer between the first and second power sources, when carried out, to be performed with transfer time being less than the maximum specified value of the transfer time and greater than the minimum specified value transfer time and with the inrush factor being less than the maximum specified value of the inrush factor and greater than the minimum specified value of the inrush factor.
11. A method comprising:
   providing electrical power to a load using a first power source;
   generating electrical power using a second power source; and
   switching, using a transfer switch, from providing power to the load using the first power source to providing power to the load using the second power source, wherein the switching is performed under control of a control circuit and based on a first user input parameter and a second user input parameter, wherein the first user input parameter specifies a maximum specified transfer time, and wherein the second user input parameter specifies a maximum specified inrush factor.
12. The method of clause 11, further comprising adjusting the transfer time and inrush factor such that, in response to switching between the first and second power sources, the inrush factor increases as the transfer time decreases, and the inrush factor decreases as the transfer time increases.
13. The method of any one of clauses 11 to 12, wherein the first power source is a primary power source and the second power source is a secondary power source, and wherein the method further comprises operating at least one primary relay coupled between the first power source and the load, and at least one secondary relay coupled between the second power source and the load.
14. The method of any one of clauses 11 to 13, further comprising providing power to a transformer from a from a selected one of the first and second power sources.
15. The method of any one of clauses 11 to 14, further comprising receiving the first and second user input parameters via a user input mechanism having a plurality of settings, wherein each of the plurality of settings specifies the transfer time and the inrush factor.
16. The method of clause 15, further comprising selecting a particular one of the plurality of settings to cause the switching between the first and second power sources to be performed at a maximum specified value of the transfer time and a minimum specified value of the inrush factor.
17. The method of any one of clauses 15 to 16, further comprising selecting a particular one of the plurality of settings that, when selected, causes the switching between the first and second power sources to be performed at a maximum specified value of the inrush factor and a minimum specified value of the transfer time.
18. The method of any one of clauses 15 to 17, further comprising selecting a particular one of the plurality of settings that, when selected, causes the switching between the first and second power sources to be performed with the transfer time being less than the maximum specified value of the transfer time and greater than the minimum specified value of the transfer time, and with the inrush factor being less than the maximum specified value of the inrush factor and greater than the minimum specified value of the inrush factor.
19. A system comprising:
   a first AC power source configured to provide electrical power to a load, wherein the first AC power source is a primary power source for the load;
   a second AC power source configured to provide electrical power to the load, wherein the second AC power source is a secondary power source for the load;
   a transfer switch configured to switch a source of power to the load between the first power source and the second power source; and
   a control circuit configured to cause the transfer switch to select one of the first and second power sources to provide power to the load, wherein the control circuit is configured to cause switching between the first and second power sources based on a first user input parameter and a second user input parameter, wherein the first user input parameter specifies a transfer time, and wherein the second user input parameter specifies an inrush factor, wherein the control circuit includes a user input mechanism having a plurality of settings, wherein each of the plurality of settings specifies the transfer time and the inrush factor.
20. The system of clause 19, wherein the plurality of settings include:
   a first one of the plurality of settings that, when selected, causes a transfer between the first and second power sources, when carried out, to be performed at a maximum specified value of the transfer time and a minimum specified value of the inrush factor;
   a second one of the plurality of settings that, when selected, causes a transfer between the first and second power sources, when carried out, to be performed at a maximum specified value of the inrush factor and a minimum specified value of the transfer time; and
   a third one of the plurality of settings that, when selected, causes a transfer between the first and second power sources, when carried out, to be performed with transfer time being less than the maximum specified value of the transfer time and greater than the minimum specified value transfer time and with the inrush factor being less than the maximum specified value of the inrush factor and greater than the minimum specified value of the inrush factor.

## Claims

1. A power distribution apparatus comprising:
a first power source configured to provide electrical power to a load;
a second power source configured to provide electrical power to the load;
a transfer switch configured to switch a source of power to the load between the first power source and the second power source; and
a control circuit configured to cause the transfer switch to select one of the first and second power sources to provide power to the load, wherein the control circuit is configured to cause switching between the first and second power sources based on a first user input parameter and a second user input parameter, wherein the first user input parameter specifies a transfer time, and wherein the second user input parameter specifies an inrush factor.

2. The power distribution apparatus of claim 1, wherein the first and second power sources are AC power sources.

3. The power distribution apparatus of any preceding claim, wherein, in response to switching between the first and second power sources, the inrush factor increases as the transfer time decreases, and wherein the inrush factor decreases as the transfer time increases.

4. The power distribution apparatus of any preceding claim, further comprising a transformer coupled to receive power from a selected one of the first and second power sources.

5. The power distribution apparatus of any preceding claim, wherein the first power source is a primary power source, and wherein the second power source is a secondary power source.

6. The power distribution apparatus of any preceding claim, further comprising at least one primary relay coupled between the first power source and the load, and at least one secondary relay coupled between the second power source and the load.

7. The power distribution apparatus of any preceding claim, wherein the control circuit includes a user input mechanism having a plurality of settings, wherein each of the plurality of settings specifies the transfer time and the inrush factor.

8. The power distribution apparatus of claim 7, wherein a first one of the plurality of settings, when selected, causes a transfer between the first and second power sources, when carried out, to be performed at a maximum specified value of the transfer time and a minimum specified value of the inrush factor.

9. The power distribution apparatus of claim 8, wherein a second one of the plurality of settings, when selected, causes a transfer between the first and second power sources, when carried out, to be performed at a maximum specified value of the inrush factor and a minimum specified value of the transfer time.

10. The power distribution apparatus of claim 9, wherein a third one of the plurality of settings, when selected, causes a transfer between the first and second power sources, when carried out, to be performed with transfer time being less than the maximum specified value of the transfer time and greater than the minimum specified value transfer time and with the inrush factor being less than the maximum specified value of the inrush factor and greater than the minimum specified value of the inrush factor.

11. A method comprising:
providing electrical power to a load using a first power source;
providing electrical power to the load using a second power source; and
switching, using a transfer switch, a source of power to the load between the first power source and the second power source, wherein the switching is performed under control of a control circuit and based on a first user input parameter and a second user input parameter, wherein the first user input parameter specifies a transfer time, and wherein the second user input parameter specifies an inrush factor.

12. The method of claim 11, further comprising adjusting the transfer time and inrush factor such that, in response to switching between the first and second power sources, the inrush factor increases as the transfer time decreases, and the inrush factor decreases as the transfer time increases.

13. The method of any one of the claims 11 to 12, wherein the first power source is a primary power source and the second power source is a secondary power source, and wherein the method further comprises operating at least one primary relay coupled between the first power source and the load, and at least one secondary relay coupled between the second power source and the load;
and optionally, further comprising providing power to a transformer from a selected one of the first and second power sources; and optionally further comprising receiving the first and second user input parameters via a user input mechanism having a plurality of settings, wherein each of the plurality of settings specifies the transfer time and the inrush factor;
and optionally, further comprising receiving the first and second user input parameters via a user input mechanism having a plurality of settings, wherein each of the plurality of settings specifies the transfer time and the inrush factor;
and optionally, further comprising selecting a particular one of the plurality of settings to cause the switching between the first and second power sources to be performed at a maximum specified value of the transfer time and a minimum specified value of the inrush factor;
and optionally, further comprising selecting a particular one of the plurality of settings that, when selected, causes the switching between the first and second power sources to be performed at a maximum specified value of the inrush factor and a minimum specified value of the transfer time;
and optionally, further comprising selecting a particular one of the plurality of settings that, when selected, causes the switching between the first and second power sources to be performed with the transfer time being less than the maximum specified value of the transfer time and greater than the minimum specified value of the transfer time, and with the inrush factor being less than the maximum specified value of the inrush factor and greater than the minimum specified value of the inrush factor.

14. A system comprising:
a first AC power source configured to provide electrical power to a load, wherein the first AC power source is a primary power source for the load;
a second AC power source configured to provide electrical power to the load, wherein the second AC power source is a secondary power source for the load;
a transfer switch configured to switch a source of power to the load between the first power source and the second power source; and
a control circuit configured to cause the transfer switch to select one of the first and second power sources to provide power to the load, wherein the control circuit is configured to cause switching between the first and second power sources based on a first user input parameter and a second user input parameter, wherein the first user input parameter specifies a transfer time, and wherein the second user input parameter specifies an inrush factor, wherein the control circuit includes a user input mechanism having a plurality of settings, wherein each of the plurality of settings specifies the transfer time and the inrush factor.

15. The system of claim 14, wherein the plurality of settings include:
a first one of the plurality of settings that, when selected, causes a transfer between the first and second power sources, when carried out, to be performed at a maximum specified value of the transfer time and a minimum specified value of the inrush factor;
a second one of the plurality of settings that, when selected, causes a transfer between the first and second power sources, when carried out, to be performed at a maximum specified value of the inrush factor and a minimum specified value of the transfer time; and
a third one of the plurality of settings that, when selected, causes a transfer between the first and second power sources, when carried out, to be performed with transfer time being less than the maximum specified value of the transfer time and greater than the minimum specified value transfer time and with the inrush factor being less than the maximum specified value of the inrush factor and greater than the minimum specified value of the inrush factor.
